# EUROPÄISCHE PATENTANMELDUNG

(11) **EP 4 450 216 A1**
(43) Veröffentlichungstag der Anmeldung: **23.10.2024**
(21) Anmeldenummer: 24170833.8
(22) Anmeldetag: 17.04.2024
(51) Int. Cl.: B23Q 1/03, B23Q 3/08

(54) **HALTEVORRICHTUNG MIT UNTERDRUCKMODULEN UND BÜRSTEN ZUM HALTEN EINES FLACHMATERIALS UND BAUKASTEN**

(30) Priorität: 21.04.2023 DE 102023110268
(71) Anmelder: SCHUNK Electronic Solutions GmbH, 78112 St. Georgen (DE)
(72) Erfinder: Flaig, Sven, 78078 Niedereschach (DE); Kiebe, Mattias, 78532 Tuttlingen (DE); Ringwald, Stefan, 79215 Elzach (DE)
(74) Vertreter: DREISS Patentanwälte PartG mbB

(57) **Zusammenfassung**

Die Erfindung betrifft eine Haltevorrichtung (200) zum Halten eines Flachmaterials (12) in einer Bearbeitungsvorrichtung (10), insbesondere einer Laser-Bearbeitungsvorrichtung, die Haltevorrichtung (200) umfassend:
- eine Arbeitsplatte (204) mit einer entlang einer Plattenebene (222) erstreckenden Plattenoberseite (220),
- entlang einer Halterichtung (271) erstreckende Unterdruckvorrichtungen (206) mit jeweils einem auf der Plattenoberseite (220) angeordneten Grundsockel (226) und einem am Grundsockel (226) angeordneten Düsenkopf (256) zum Ansaugen des Flachmaterials (12),
- entlang der Halterichtung (271) erstreckende Unterstützungsmodule (208) mit jeweils einem auf der Plattenoberseite (220) angeordneten Modulsockel (288) und einer am Modulsockel (288) angeordneten, entlang einer Bürstenebene (301) erstreckenden Bürste (302) zum Tragen des Flachmaterials (12).

## Beschreibung

Die Erfindung betrifft eine Haltevorrichtung zum Halten eines Flachmaterials und einen zugehörigen Baukasten.

In der Elektronikindustrie und insbesondere bei der Herstellung von Akkus für die E-Mobilität werden Flachmaterialien, insbesondere Anoden- und Kathodenfolien, benötigt.

Im Sinne dieser Anmeldung sind unter Flachmaterialien ein- oder mehrlagige Schichten oder Folien zu verstehen, wobei die Schichten oder Folien eine wesentlich größere Längs- und Quererstreckung als eine Dicke aufweisen. Ferner ist das Flachmaterial biegeschlaf ausgebildet, sodass das Flachmaterial ohne Stützung über die Längs- und Quererstreckung wesentlich von einer ebenen Form abweicht. Ferner ist das Flachmaterial zumindest im Wesentlichen gasundurchlässig, sodass das Flachmaterial ansaugbar ist. Ferner ist das Flachmaterial oder dessen Schichten jeweils monolithisch ausgebildet. Die Flachmaterialien können insbesondere Kunststoff oder Metall umfassen, wobei metallbeschichtete Kunststoffe oder kunststoffbeschichtete Metalle ebenfalls denkbar sind. Das Flachmaterial kann als ein Flachmaterialbandabschnitt ausgebildet sein. Bei dem Flachmaterial kann es sich z.B. um eine Stromsammelfolie mit den Maßen 200mm x 280mm handeln, wobei die Folie Graphit umfasst und mit Aluminium oder Kupfer beschichtet ist.

Das Flachmaterial stellt ein Halbzeug dar, aus dem wenigstens ein Schnittstück hergestellt wird. Die Schnittstücke weisen die für den Anwendungsfall erforderliche äußere Kontur auf und sind in Bezug auf die Längs- und Quererstreckung kleiner als das Flachmaterial ausgebildet. Der restliche Teil des Flachmaterials der nicht den Schnittstücken zugeordnet ist, wird als Verschnitt bezeichnet.

Die Handhabung, Fixierung und Bearbeitung solcher Flachmaterialien, insbesondere das Herstellen von Schnittstücken aus dem Flachmaterial mittels einer Laserbearbeitung, ist aufgrund der dünnen und biegeschlafen Ausbildung des Flachmaterials und ferner aufgrund der zerstörenden Eigenschaften des Laserstrahls komplex.

Aus der US 2002/0140242 A1 ist ein anpassbares Pick-and-Place Werkzeug mit einer Platte, auf der Platte lösbar anordenbaren sowie verschieblichen Magneten und eine Halte- oder Saugvorrichtung. Aus der WO 2013/104741 A1 sind Fixiervorrichtungen zum Stützen und/oder Positionieren von Objekten bekannt. Aus der US 2003/0019342 A1 sind Haltevorrichtungen mit Bürsten bekannt, wobei eine Ansaugung von Objekten entlang der Bürsten erfolgt.

Demnach liegt der vorliegenden Erfindung die Aufgabe zugrunde, eine Haltevorrichtung zum Halten eines Flachmaterials in einer Bearbeitungsvorrichtung, insbesondere einer Laser-Bearbeitungsvorrichtung, bereitzustellen, wobei die Haltevorrichtung einfach einzurichten und langlebig ausgebildet ist.

Die der Erfindung zugrundeliegende Aufgabe wird gelöst durch eine Haltevorrichtung mit den Merkmalen des Anspruchs 1. Die Haltevorrichtung weist eine Arbeitsplatte mit einer entlang einer Plattenebene erstreckenden Plattenoberseite auf. Die Haltevorrichtung weist ferner entlang einer Halterichtung erstreckende Unterdruckvorrichtungen mit jeweils einem auf der Plattenoberseite angeordneten Grundsockel und einem am Grundsockel angeordneten Düsenkopf zum Ansaugen des Flachmaterials auf. Zudem weist die Haltevorrichtung entlang der Halterichtung erstreckende Unterstützungsmodule mit jeweils einem auf der Plattenoberseite angeordneten Modulsockel und einer am Modulsockel angeordneten, entlang einer Bürstenebene erstreckenden Bürste zum Tragen des Flachmaterials. Für ein sicheres Halten des Flachmaterials ist es erforderlich, dass das Flachmaterial mit einem regelmäßigen Abstand, insbesondere an den Rändern des Flachmaterials, gestützt wird, sodass das Flachmaterial nicht von der ebenen Ausbildung abweicht. Denn in der ebenen Ausbildung kann das Flachmaterial sicher gegriffen, gespannt und bearbeitet werden. Wenn das Flachmaterial auf einer Haltevorrichtung aufliegt und dabei bearbeitet wird, gibt es einen Konflikt zwischen der Bewegungsbahn des Bearbeitungswerkzeugs bzw. Bearbeitungsmediums, insbesondere ein Sägeblatt oder ein Laserstrahl, und dem das Flachmaterial stützenden Element. Für ein sicheres Halten ist es sinnvoll möglichst viele Unterdruckvorrichtungen vorzusehen. Für eine hohe Flexibilität bei der Bewegungsbahn ist es sinnvoll möglichst wenige Unterdruckvorrichtungen vorzusehen. Sollte es zu einem Kontakt zwischen dem Bearbeitungswerkzeug und der Unterdruckvorrichtung kommen, wird die Unterdruckvorrichtung zerstört und ein Austausch der Unterdruckvorrichtung ist erforderlich. Ferner wird die Haltefähigkeit durch die Zerstörung der Unterdruckvorrichtung verringert.

Es ist daher von Vorteil, dass neben den Unterdruckvorrichtungen auch Unterstützungsmodule mit Bürsten vorgesehen sind. Das Vorsehen von Unterstützungsmodulen schränkt die Flexibilität der Bewegungsbahn nicht ein, da die Bürste beim Kontakt mit dem Bearbeitungswerkzeug nicht zerstört und unmittelbar ausgetauscht werden muss. Die Bürste ist als Verschleißteil ausgebildet und hält trotz Kontakt die Haltewirkung aufrecht. Es ist vorteilhaft, wenn die Unterdruckvorrichtungen derart angeordnet sind, dass diese an zu stützenden Positionen des Flachmaterials angeordnet sind, an denen nicht die Bewegungsbahn verläuft, und, wenn die Unterstützungsmodule derart angeordnet sind, dass diese an zu stützenden Positionen des Flachmaterials angeordnet sind, an denen die Bewegungsbahn verläuft. Ferner ist es vorteilhaft, dass wenigstens eine Unterdruckvorrichtung im Bereich des Schnittstücks und wenigstens eine Unterdruckvorrichtung im Bereich des Verschnitts angeordnet ist. Sobald die Bürste mehrfach in Kontakt mit dem Bearbeitungswerkzeug bzw. der Bearbeitungsmedium gelangt ist, kann die Bürste einfach, schnell und günstig ausgetauscht werden. Somit eignet sich die Haltevorrichtung auch für den sicheren Einsatz z.B. mit einem Sägeblatt oder einem Laserstrahl zum Schneiden des Flachmaterials. Zudem wird sichergestellt, dass auch nach dem Schneiden des Flachmaterials in wenigstens ein Schnittstück und den Verschnitt das Schnittstück und der Verschnitt sicher gehalten werden.

Vorteilhafterweise sind die Unterdruckvorrichtungen und/oder die Unterstützungsmodule derart angeordnet, dass die Halterichtung senkrecht zur Plattenebene verläuft. In dem Fall kann das Flachmaterial, welches sich entlang einer Materialebene erstreckt, senkrecht auf die Haltevorrichtung abgelegt werden. Im Bearbeitungszustand ist das Flachmaterial vorzugsweise zwischen der Haltevorrichtung und der Bearbeitungsvorrichtung, insbesondere der Laservorrichtung, angeordnet.

Vorzugsweise weist die Arbeitsplatte ein ferromagnetisches Material, insbesondere eisenhaltiges Material, auf. Zum leichten Fixieren und individuellen Anordnen der Unterdruckvorrichtungen auf der Arbeitsplatte weisen die Unterdruckvorrichtungen jeweils einen im Grundsockel angeordneten Dauermagneten auf, welcher beim Fixieren mit dem ferromagnetischen Material der Arbeitsplatte zusammenwirkt. Zum leichten Fixieren und individuellen Anordnen der Unterstützungsmodule auf der Arbeitsplatte weisen die Unterstützungsmodule jeweils einen im Modulsockel angeordneten Dauermagneten auf, welcher beim Fixieren mit dem ferromagnetischen Material der Arbeitsplatte zusammenwirkt. Zur Aufnahme der Dauermagneten weisen der Grundsockel und/oder der Modulsockel an einer Sockelunterseite eine zur Arbeitsplatte gerichtete Magnetaufnahme auf. Die Sockelunterseite kann offen oder geschlossen ausgebildet sein.

Eine vorteilhafte Weiterbildung der Erfindung sieht vor, dass die Unterdruckvorrichtung ein zwischen dem Grundsockel und dem Düsenkopf angeordnetes Adapterstück aufweist. Das Adapterstück weist eine Düsenschnittstelle zur Anordnung des Düsenkopfes auf und ermöglicht die Anordnung unterschiedlich dimensionierter Düsenköpfe am Grundsockel. Somit können bei einem gleichbleibenden Grundsockel, gleichbleibender Positionierung und Anbindung an eine Unterdruckversorgung unterschiedlich große Düsenköpfe realisiert werden, sodass eine auf das Flachmaterial wirkende Ansaugkraft individuell anpassbar ist. Ferner ermöglicht der modulare Aufbau der Adapterstücke und der Düsenköpfe einen schnellen und einfachen Austausch.

Es ist vorteilhaft, wenn in der Unterdruckvorrichtung eine entlang der Halterichtung verlaufende Leitung vorgesehen ist. Die Leitung verbindet fluidisch einen am Grundsockel angeordneten Leitungseingang zum Anschluss an eine Unterdruckversorgung und einen am Düsenkopf angeordneten Leitungsausgang verbindet. So kann mit dem Düsenkopf am Leitungsausgang an dem Flachmaterial ein Unterdruck erzeugt werden, welcher das Flachmaterial an die Unterdruckvorrichtung ansaugt. Im Grundsockel und/oder im Adapterstück und/oder im Düsenkopf sind im Inneren jeweils ein Hohlraum vorgesehen, welche im montierten Zustand die durchgängige Leitung bilden. Der Grundsockel weist vorzugsweise einen Leitungsanschluss auf, an dem eine Leitung ankoppelbar ist, welche mit einer Unterdruckversorgung fluidisch verbunden ist. Es ist denkbar, dass der Leitungseingang senkrecht zur Halterichtung verläuft und in den sich parallel zur Halterichtung erstreckenden Hohlraum mündet.

Es ist ferner vorteilhaft, wenn die Unterstützungsmodule derart an der Arbeitsplatte angeordnet sind, dass die Bürstenebene senkrecht zur Plattenebene verläuft. Demnach kann die Gewichtskraft des Flachmaterials durch die Bürste bzw. das Unterstützungsmodul in die Arbeitsplatte geleitet werden.

Vorzugsweise weisen die Unterstützungsmodule jeweils zwischen dem Modulsockel und der Bürste einen Modulsteg auf. An den Modulsteg können unterschiedliche Bürsten angeordnet werden. Ferner ermöglicht der modulare Aufbau der Modulstege und der Bürsten einen schnellen und einfachen Austausch.

Es ist vorteilhaft, wenn die Unterstützungsmodule jeweils eine Bürstenaufnahme zur Aufnahme der Bürste aufweisen. Die Bürstenaufnahme ist vorzugsweise schienenförmig ausgebildet und weist eine parallel zur Bürstenebene verlaufende Nut auf, wobei die Bürste in der Nut teilweise aufgenommen wird. Die Bürstenaufnahme ist vorzugsweise mit einem parallel zur Plattenebene verlaufenden Befestigungsmittel, insbesondere einer Schraube, mit dem Modulsteg verbunden. Im Modulsteg ist vorzugsweise ein Gewinde vorgesehen, welches mit dem Befestigungsmittel zusammenwirken kann.

Es ist ferner vorteilhaft, wenn ein Klemmelement zum Fixieren der Bürste in der Bürstenaufnahme vorgesehen ist. Das Klemmelement und die Bürste können einstückig bzw. monolithisch ausgebildet sein. Das Klemmelement kann seitlich, senkrecht zur Halterichtung in die Bürstenaufnahme eingeschoben werden. Wenn die Bürste und das Klemmelement lösbar voneinander ausgebildet sind, kann zunächst die Bürste und dann das Klemmelement in die Bürstenaufnahme eingeführt werden.

Eine vorteilhafte Weiterbildung sieht vor, dass die Bürste eine Vielzahl von Bürstenhaaren aufweist. Bei einem Kontakt des Bearbeitungswerkzeugs bzw. Bearbeitungsmediums mit der Bürste werden somit nur einzelne Bürstenhaare zerstört, wobei die restlichen Bürstenhaare weiterhin die Haltefunktion der Bürste aufrechterhalten.

Die Beschreibung umfasst ferner eine Haltevorrichtung nach den Ansprüchen 1 bis 9, wobei die Bürste eine Vielzahl von Bürstenhaaren umfasst.

Eine weitere vorteilhafte Weiterbildung sieht vor, dass die Bürste, insbesondere die Bürstenhaare, aus einem Kunststoff, insbesondere Nylon oder Polypropylen, hergestellt ist. Ferner ist es vorteilhaft, wenn die Bürstenhaare einen Durchmesser im Bereich zwischen 1 um bis 500 um, insbesondere zwischen 2 um und 200 um, vorzugsweise zwischen 5 um und 100 um, und bevorzugt zwischen 20 um und 60 um aufweisen.

Die Beschreibung umfasst ferner eine Haltevorrichtung nach den Ansprüchen 1 bis 9, wobei die Bürste, insbesondere die Bürstenhaare, aus einem Kunststoff hergestellt ist.

Eine vorteilhafte Weiterbildung sieht vor, dass die Haltevorrichtung eine parallel zur Plattenebene erstreckende Schutzplatte aufweist. Die Schutzplatte dient zum Schutz der Haltevorrichtung vor dem Bearbeitungswerkzeug und/oder dem Bearbeitungsmedium. Somit kann gewährleistet werden, dass die Haltevorrichtung, insbesondere deren Komponenten, weniger verschleißen und langlebig ausgebildet sind. Bei Verwendung eines Laserstrahls kann die Schutzplatte derart optisch ausgebildet sein, dass die Laserstrahlung zumindest teilweise absorbiert wird. Die Schutzplatte ist vorzugsweise zwischen dem Flachmaterial bzw. der Oberseite der Haltevorrichtung und der Arbeitsplatte angeordnet. Die Schutzplatte ist vorzugsweise zwischen dem Grundsockel und dem Adapterstück oder zwischen dem Adapterstück und dem Düsenkopf angeordnet. Die Schutzplatte ist vorzugsweise zwischen dem Modulsockel und dem Modulsteg oder zwischen dem Modulsteg und der Bürstenaufnahme angeordnet.

Eine weitere vorteilhafte Weiterbildung sieht vor, dass die Schutzplatte als Rasterplatte ausgebildet ist. Die Rasterplatte weist Rasterausnehmungen auf, in welche die Unterdruckvorrichtungen und/oder die Unterstützungsmodule eingreifen können. Vorzugsweise finden die Rasterausnehmungen zur Positionierung der Unterdruckvorrichtungen und/oder der Unterstützungsmodule auf der Arbeitsplatte Verwendung. Die Rasterplatte kann als zusätzliche Fixierung für die Unterdruckvorrichtungen und/oder die Unterstützungsmodule entlang der Plattenebene dienen.

Es ist vorteilhaft, wenn der Grundsockel und der Modulsockel identisch ausgebildet sind. Somit können die Position der Unterdruckvorrichtung und der Unterstützungsmodule beliebig vertauscht werden und es werden mehr Gleichteile verwendet. Falls ein Unterstützungsmodul an einem Sockel mit einem Leitungsanschluss Verwendung findet, kann der Leitungsanschluss mit einem lösbaren Blindstopfen verschlossen werden.

Eine vorteilhafte Weiterbildung der Erfindung sieht vor, dass die Haltevorrichtung zusätzlich eine Grundplatte aufweist, wobei die Arbeitsplatte auf, an oder in der Grundplatte angeordnet ist. Die Grundplatte kann massiver ausgebildet sein. Ferner die Grundplatte Bohrungen zum Verbinden mit einem Grundgehäuse einer Bearbeitungsvorrichtung aufweisen.

Eine weitere vorteilhafte Ausbildung der Erfindung sieht vor, dass wenigstens eine Schlauchklemme zum Fixieren von Schläuchen an der Arbeitsplatte und/oder an der Grundplatte vorgesehen sind. So können die Schläuche sicher an der Haltevorrichtung befestigt werden. Mittels der Schläuche kann die Unterdruckversorgung mit jeweils dem Leitungsanschluss des Grundsockels fluidisch verbunden werden und die Unterdruckvorrichtung mit einem Vakuum versorgt werden. Die Schlauchklemmen können vorzugsweise entlang der Plattenebene neben der Schutzplatte auf der Arbeitsplatte angeordnet werden, insbesondere wenn der Arbeitsbereich des Bearbeitungswerkzeugs bzw. Bearbeitungsmediums nur im Bereich der Schutzplatte vorgesehen ist.

Die Beschreibung umfasst ferner eine Haltevorrichtung nach den Ansprüchen 1 bis 11, wobei ferner wenigstens eine Schlauchklemme zum Fixieren von Schläuchen vorgesehen ist, wobei mittels der Schläuche eine Unterdruckversorgung mit jeweils dem Leitungseingang fluidisch verbindbar sind.

Es ist vorteilhaft, wenn die Schlauchklemme einen Klemmensockel mit einem Dauermagneten zum Fixieren der Schlauchklemme auf der Arbeitsplatte aufweist. So können auch die Schlauchklemmen einfach und schnell auf der Arbeitsplatte positioniert und fixiert werden.

Die der Erfindung zugrundeliegende Aufgabe wird ferner durch einen Baukasten mit den Merkmalen des Anspruchs 14 gelöst. Der Baukasten weist zumindest mehrere Unterdruckvorrichtungen, insbesondere Grundsockel und/oder Adapterstücke und/oder Düsenköpfe, in unterschiedlichen Größen und wenigstens ein Unterstützungsmodul auf. Vorteilhaftweise weist der Baukasten ferner Unterstützungsmodule, insbesondere Modulsockel und/oder Modulstege und/oder Bürstenaufnahmen und/oder Bürste und/oder Bürstenhaare, in unterschiedlichen Größen auf. Vorteilhaftweise weist der Baukasten ferner wenigstens eine ferromagnetische Arbeitsplatte und/oder eine Grundplatte auf. Vorteilhaftweise weist der Baukasten ferner Schlauchklemmen, insbesondere in unterschiedlichen Größen, auf. Zusätzlich oder alternativ zur Größe können sich die im Baukasten enthaltenen Elemente auch hinsichtlich der Form und/oder des Materials unterscheiden.

Die der Erfindung zugrundeliegende Aufgabe wird ebenfalls durch eine Bearbeitungsvorrichtung mit einer zuvor beschriebenen Haltevorrichtung gelöst.

Weitere Einzelheiten und vorteilhafte Ausgestaltungen der Erfindung sind der nachfolgenden Beschreibung zu entnehmen, anhand derer Ausführungsbeispiele der Erfindung weiter beschrieben und erläutert sind.

Es zeigen:
- Fig. 1: eine perspektivische Ansicht einer erfindungsgemäßen Haltevorrichtung;
- Fig. 1a: eine schematische Seitenansicht einer weiteren erfindungsgemäßen Haltevorrichtung;
- Fig. 2: eine perspektivische Ansicht einer weiteren erfindungsgemäßen Haltevorrichtung;
- Fig. 3: eine weitere perspektivische Ansicht der Haltevorrichtung gemäß Fig. 2;
- Fig. 4: eine perspektivische Ansicht einer erfindungsmäßen Grundplatte mit einer Arbeitsplatte;
- Fig. 5: eine perspektivische Ansicht einer erfindungsmäßen Unterdruckvorrichtung;
- Fig. 6: eine weitere perspektivische Ansicht der Unterdruckvorrichtung gemäß Fig. 5;
- Fig. 7: eine schematische Schnittdarstellung der Unterdruckvorrichtung gemäß Fig. 5;
- Fig. 8: eine perspektivische Ansicht eines erfindungsmäßen Unterstützungsmoduls;
- Fig. 9: eine schematische Schnittdarstellung des Unterstützungsmoduls gemäß Fig. 8;
- Fig. 10: eine perspektivische Ansicht einer erfindungsgemäßen Schlauchklemme;
- Fig. 11: eine schematische Schnittdarstellung der Schlauchklemme gemäß Fig. 10;
- Fig. 12: eine Bearbeitungsvorrichtung mit einer erfindungsgemäßen Haltevorrichtung; und
- Fig. 13: ein Magazin der Bearbeitungsvorrichtung gemäß Fig. 12 mit einer erfindungsgemäßen Haltevorrichtung.

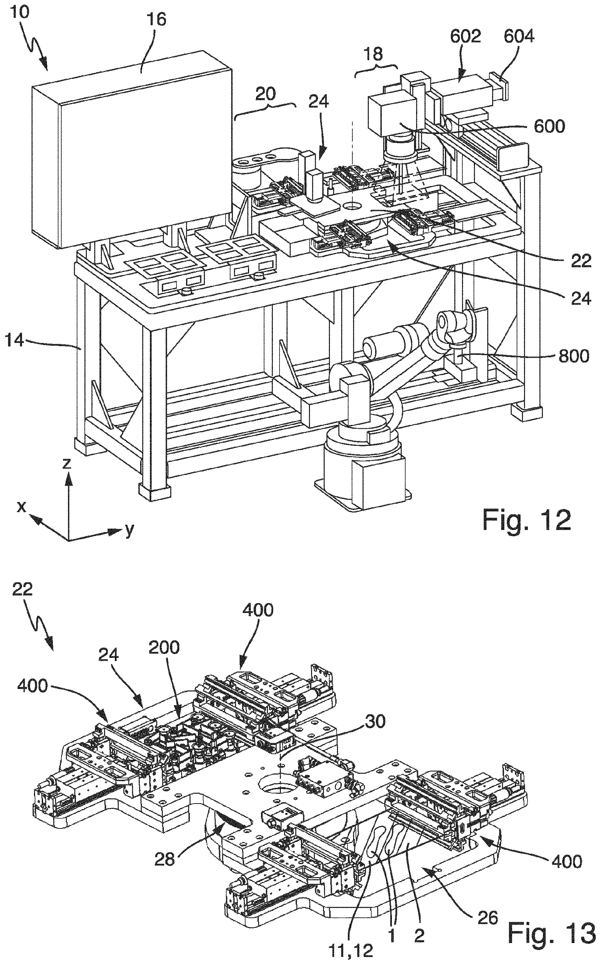

Die in Fig. 12 gezeigte Bearbeitungsvorrichtung 10 dient zur Bearbeitung von entlang einer Materialebene 11 erstreckenden Flachmaterialien 12, welche insbesondere biegeschlaf und im Wesentlichen gasundurchlässig sind.

Derartige Flachmaterialien 12 sind z.B. Papier oder Folien. Die Flachmaterialien 12 können ein- und mehrlagig ausgebildet sein, wobei das Grundmaterial und/oder das Beschichtungsmaterial aus Kunststoff oder Metall sein kann. Insbesondere für die Akkufertigung sind Folien mit einem Grundmaterial auf Basis von Graphit und mit einem Beschichtungsmaterial auf Basis von Kupfer oder Aluminium zu fertigen. Aufgrund der geringen Dicke und biegeschlafen Eigenschaften des Flachmaterials 12 sind besondere Anforderungen an die Bearbeitungsvorrichtung 10 zu stellen.

Die Bearbeitungsvorrichtung 10 weist gemäß Fig. 12 ein Vorrichtungsgehäuse 14 und einen Schaltschrank 16 auf. Im Vorrichtungsgehäuse 14 weist die Bearbeitungsvorrichtung 10 einen Bearbeitungsbereich 18 und einen Ladebereich 20 auf. Ferner weist die Bearbeitungsvorrichtung 10 eine x-Achse X, eine senkrecht zur x-Achse X verlaufende y-Achse Y und eine senkrecht zur x- und y-Achse verlaufende z-Achse Z auf. Im beladenen Zustand verläuft die Materialebene 11 des Flachmaterials 12 parallel zur x-Achse und zur y-Achse sowie senkrecht zur z-Achse.

Die Bearbeitungsvorrichtung 10 weist gemäß der Fig. 13 ein Magazin 22 mit einem ersten Magazinplatz 24 und einem zweiten Magazinplatz 26 auf. Das Magazin 22 ist mittels eines Drehantriebs 28 um eine parallel zur z-Achse verlaufende Magazinachse 30 rotierbar, sodass jeweils ein Magazinplatz 24, 26 in einer Bearbeitungsposition in den Bearbeitungsbereich 18 und der andere Magazinplatz 24, 26 in eine Ladeposition in den Ladebereich 20 verschwenkbar ist. Die Bearbeitungsposition und die Ladeposition sind entlang der y-Achse einander gegenüberliegend angeordnet. Ferner ist das Magazin 22 derart rotierbar, dass sowohl der erste Magazinplatz 24 als auch der zweite Magazinplatz 26 außerhalb des Bearbeitungsbereich 18 und außerhalb des Ladebereichs 20 in einer Zwischenposition verschwenkbar sind.

Jeder Magazinplatz 24, 26 weist eine Unterdruck-Haltevorrichtung 200 und eine maulförmige Spannvorrichtung 400 auf. Demnach wird die Haltevorrichtung 200 und die Spannvorrichtung 400 mit dem zugehörigen Magazinplatz 24, 26 in die Bearbeitungsposition, die Ladeposition oder die Zwischenposition mit verschwenkt.

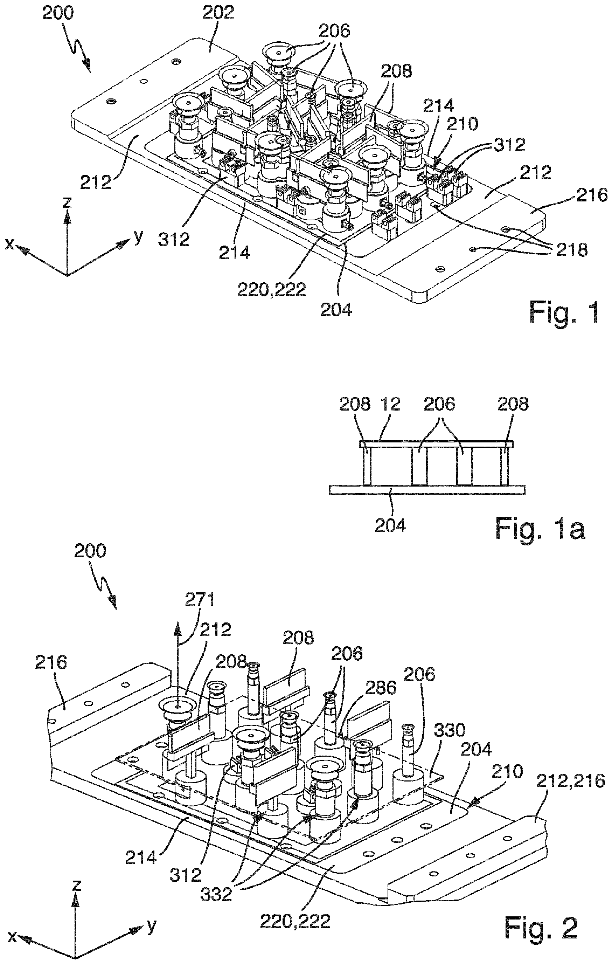

Die Haltevorrichtung 200 weist gemäß Fig. 1 bis 3 eine Grundplatte 202 und eine in der Grundplatte 202 angeordnete Arbeitsplatte 204 auf. Die Arbeitsplatte 204 umfasst ein ferromagnetisches Material, vorzugsweise Eisen. Die Grundplatte 202 und/oder die Arbeitsplatte 204 weisen vorzugsweise entlang der x-Achse und der y-Achse die äußeren Maße des zu bearbeitenden Flachmaterials 12 auf. Auf der Arbeitsplatte 204 sind in Fig. 1 16 und in Fig. 2 neun entlang einer Halterichtung 271, parallel zur z-Achse erstreckende magnetische Unterdruckvorrichtungen 206 vorgesehen, wobei die Unterdruckvorrichtungen 206 jeweils in drei verschiedenen Größen ausgebildet sind. Ferner sind in Fig. 1 16 und in Fig. 2 vier entlang der Halterichtung 271 erstreckende magnetische Unterstützungsmodule 208 ausgebildet. Die Unterdruckvorrichtungen 206 sind derart auf der Arbeitsplatte 204 angeordnet, dass diese nicht mit der Bewegungsbahn des Laserstrahls kollidieren. Die Unterstützungsmodule 208 sind so angeordnet, dass diese zusätzlich das Flachmaterial 12 stützen und dabei in der Bewegungsbahn des Laserstrahls angeordnet sein können.

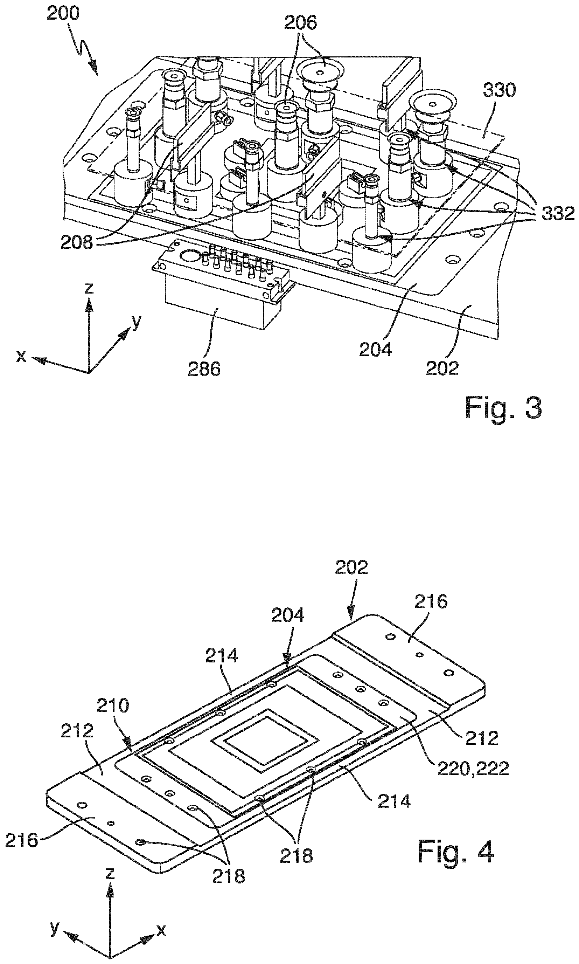

Die Grundplatte 202 weist gemäß Fig. 4 eine Plattenaufnahme 210 zur Aufnahme der Arbeitsplatte 204 auf. Die Plattenaufnahme 210 ist so ausgebildet, dass die Arbeitsplatte 204 bündig in der Grundplatte 202 aufgenommen wird. Durch die Trennung der Grundplatte 202 und der Arbeitsplatte 204 kann die Arbeitsplatte 204 bei Verschleiß einfach und schnell ausgetauscht werden. Die Grundplatte 202 weist parallel zur x-Achse der Arbeitsplatte 204 überstehende Seitenbereiche 212 und parallel zur y-Achse der Arbeitsplatte 204 überstehende Schmalbereiche 214 auf. An den Seitenbereichen 212 ist jeweils ein Plattenabsatz 216 vorgesehen. Der Plattenabsatz 216 ist gegenüber der restlichen Grundplatte 202 dicker ausgebildet, sodass eine sichere Befestigung der Haltevorrichtung 200 möglich ist. Es sind vorzugsweise im Bereich der Plattenaufnahme 210, den Seitenbereichen 212 und der Plattenabsätze Bohrungen 218 zur Befestigung von Peripherie, wie z.B. Schlauchklemmen 312 oder zur Befestigung an einem Gehäuse oder Magazin 22 vorgesehen.

Die Arbeitsplatte 204 weist eine Plattenoberseite 220 auf, welche sich entlang einer Plattenebene 222 erstreckt. Auf der Plattenoberseite 220 können die Unterdruckvorrichtungen 206 und die Unterstützungsmodule 208 positioniert und fixiert werden. Sowohl die Unterdruckvorrichtungen 206 als auch die Unterstützungsmodule 208 weisen Dauermagnete 224 auf, welche mit dem ferromagnetische Material der Arbeitsplatte 204 zusammenwirken.

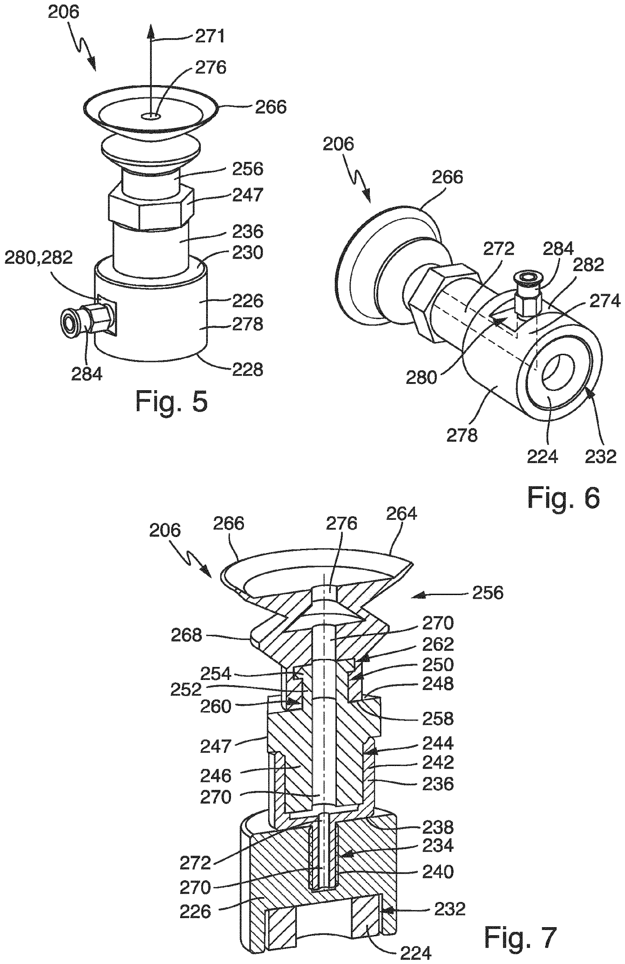

Gemäß Fig. 5 bis 7 weisen die Unterdruckvorrichtungen 206 einen kreiszylindrischen Grundsockel 226 mit einer Sockelunterseite 228 und einer Sockeloberseite 230. An der Sockelunterseite 228 ist eine Magnetaufnahme 232 zur Aufnahme des insbesondere hohlzylinderförmigen Dauermagneten 224 vorgesehen. An der Sockeloberseite 230 ist eine Adapteraufnahme 234 zur lösbaren Aufnahme eines Adapterstücks 236 vorgesehen. Die Adapteraufnahme 234 ist vorzugsweise kreiszylindrisch ausgebildet und erstreckt sich parallel zur z-Achse.

Das Adapterstück 236 weist an einer Adapterunterseite 238 einen hohlen kreiszylindrischen ersten Adapterschaft 240 auf, welcher in die Adapteraufnahme 234 einführbar und/oder einschraubbar ist. Das Adapterstück 236 weist ferner einen an den Adapterschaft 240 anschließenden, hohlen kreiszylindrischen Adapterzylinder 242 auf, welcher als Zwischenaufnahme 244 ausgebildet ist.

In der Zwischenaufnahme 244 ist ein hohles kreiszylindrisches Verbindungsstück 246 aufgenommen und/oder verschraubt. Das Verbindungsstück 246 weist zum Festziehen vorzugsweise einen Außensechskant 247 auf. Das Adapterstück 236 weist an einer Adapteroberseite 248, insbesondere am Verbindungsstück 246, eine Düsenschnittstelle 250 auf. Die Düsenschnittstelle 250 weist einen Schnittstellenschaft 252 und einen an den Schnittstellenschaft 252 anschließenden Schnittstellenkegel 254 auf. Das Adapterstück 236 ist vorzugsweise zweistückig aufgebaut, wobei der Adapterschaft 240 und der Adapterzylinder 242 einstückig ausgebildet sind sowie das Verbindungsstück 246 mit dem Schnittstellenschaft 252 und dem Schnittstellenkegel 254 einstückig ausgebildet sind. Es ist ferner denkbar, dass das Adapterstück 236 einstückig ausgebildet ist.

An der Düsenschnittstelle 250 ist ein Düsenkopf 256 anordenbar, wobei der Düsenkopf 256 an einer Düsenunterseite 258 eine Düsenausnehmung 260 mit einer Düsenhinterschneidung 262 aufweist, wobei beim Aufsetzen des Düsenkopfs 256 auf die Düsenschnittstelle 250 der Schnittstellenkegel 254 die Düsenhinterschneidung 262 hintergreift und somit den Düsenkopf 256 auf der Düsenschnittstelle 250 festsetzt. An einer Düsenoberseite 264 des Düsenkopfs 256 ist ein pfannenförmiger Greifabschnitt 266 zum Kontaktieren, Ansaugen und Greifen des Flachmaterials 12 vorgesehen. Zwischen der Düsenausnehmung 260 und dem Greifabschnitt 266 ist doppelkegelförmiger Tellerabschnitt 268 vorgesehen, welcher eine elastische Verformung, des Düsenkopfs 256 entlang der z-Achse ermöglicht und so zum sanften Greifen des Flachmaterials 12 beiträgt.

Im Inneren der Unterdruckvorrichtungen 206, insbesondere im Grundsockel 226, im Adapterstück 236, im Verbindungsstück 246 und/oder im Düsenkopf 256, ist jeweils ein Hohlraum 270 vorgesehen, welcher im montierten Zustand eine durchgängige, entlang der z-Achse verlaufende Leitung 272 bildet. Die Leitung 272 verbindet einen am Grundsockel 226 angeordneten, parallel zur Plattenebene 222 verlaufenden Leitungseingang 274 fluidisch mit einem am Greifabschnitt 266 angeordneten Leitungsausgang 276.

Der Grundsockel 226 weist an seiner Sockelmantelfläche 278 eine Sockelausnehmung 280 mit einem ebenen Ausnehmungsboden 282 auf, wobei der Leitungseingang 274 in den Ausnehmungsboden 282 mündet. An der Sockelausnehmung 280 ist ein Leitungsanschluss 284 anschließbar, welcher die Unterdruckvorrichtung 206 mittels nicht dargestellter Schläuche mit einer nicht dargestellten Unterdruckversorgung fluidisch verbindet. Zum Verteilen des Mediums von der Unterdruckversorgung zu den Schläuchen ist eine in Fig. 3 dargestellte Druckverteilung 286 an der Haltevorrichtung 200 anordenbar.

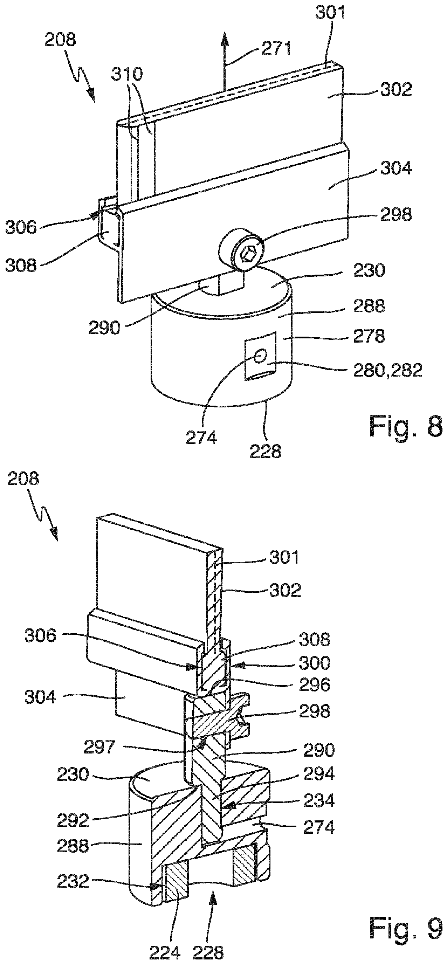

Gemäß der Fig. 8 und 9 weisen die Unterstützungsmodule 208 einen Modulsockel 288 auf. Der Modulsockel 288 ist vorzugsweise identisch zum Grundsockel 226 ausgebildet, wobei der Leitungseingang 274 hier mit einem nicht dargestellten Blindstopfen verschließbar ist. Demnach weist der Modulsockel 288 ebenfalls unter anderem eine Magnetaufnahme 232 zur Aufnahme des insbesondere hohlzylinderförmigen Dauermagneten 224 und eine Adapteraufnahme 234 auf.

Jedoch ist in der Adapteraufnahme 234 des Modulsockels 288 lösbar ein kreiszylindrischer Modulsteg 290 angeordnet. Der Modulsteg 290 weist an seiner Stegunterseite 292 einen Stegschaft 294 auf, welcher in die Adapteraufnahme 234 einführbar und/oder einschraubbar ist. An der Stegoberseite 296 des Modulstegs 290 ist eine parallel zur Plattenebene 222 verlaufende Befestigungsaufnahme 296 vorgesehen.

Mittels eines Befestigungsmittels 298 kann an dem Modulsteg 290 eine Bürstenaufnahme 300 zur Aufnahme einer entlang einer Bürstenebene 301 erstreckende Bürste 302 befestigt werden. Die Bürstenaufnahme 300 weist einen senkrecht zur Plattenebene 222 verlaufenden Verbindungsabschnitt 304 auf, wobei das Befestigungsmittel 298 zentral durch den Verbindungsabschnitt 304 durchführbar ist und der Verbindungsabschnitt 304 im montierten Zustand seitlich am Modulsteg 290 zur Anlage kommt. An den Verbindungsabschnitt 304 angrenzend weist die Bürstenaufnahme 300 einen parallel zur Plattenebene 222 verlaufenden Nutabschnitt 306 auf, welcher insbesondere im montierten Zustand auf dem Modulsteg 290 aufliegt. Die Bürste 302 ist in den Nutabschnitt 306 einführbar.

Dazu weist die Bürste 302 ein Klemmelement 308 auf, wobei das Klemmelement 308 seitlich in den Nutabschnitt 306 einführbar ist. Ferner weist die Bürste 302 eine Vielzahl von parallel zur z-Achse verlaufende Bürstenhaare 310 auf. Die Bürste 302 dient zum Halten des auf der Haltevorrichtung 200 bereitgestellten Flachmaterials 12, wobei auch bei einem Verschleiß weniger Bürstenhaare 310, z.B. durch einen Kontakt mit einem Laserstrahl, die Haltefähigkeit der Unterstützungsmodule 208 aufrechterhalten wird.

Der Modulsockel 288, der Modulsteg 290, die Bürstenaufnahme 300 und die Bürste 302 können mehrteilig ausgebildet sein. Es ist jedoch denkbar, dass die Bürstenaufnahme 300 und die Bürste 302 einteilig ausgebildet sind. Es ist ferner denkbar, dass die Bürstenhaare 310 und das Klemmelement 308 einteilig oder mehrteilig ausgebildet sind. Es ist ferner denkbar, dass die Bürstenaufnahme 300 und der Modulsteg 290 einteilig ausgebildet sind.

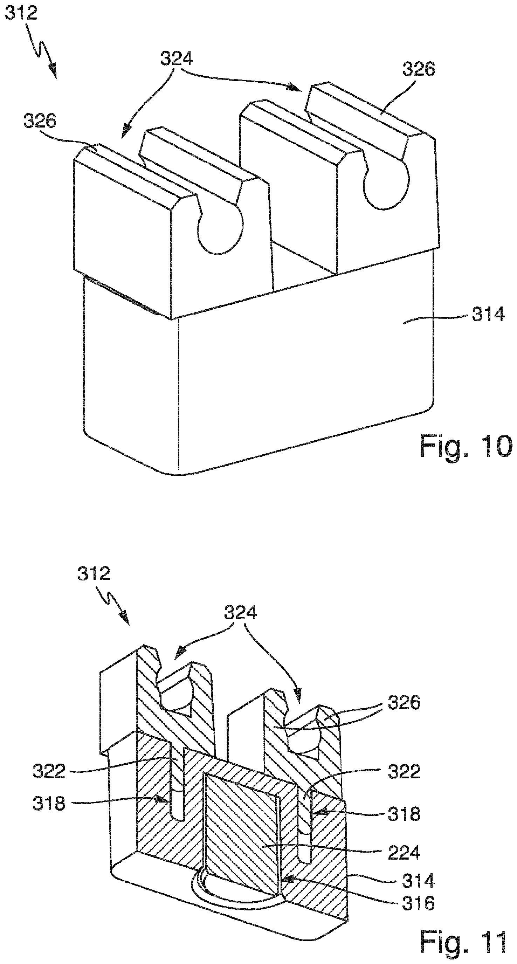

Zum Befestigen und Führen der nicht dargestellten Schläuche sind gemäß Fig. 1 und 3 an der Grundplatte 202 und/oder an der Plattenoberseite 220 der Arbeitsplatte 204 angeordnete Schlauchklemmen 312 vorgesehen. Gemäß den Fig. 10 und 11 weist die Schlauchklemme 312 einen Klemmensockel 314 mit einer hohlzylindrischen Klemmenmagnetaufnahme 316 zur Aufnahme eines zylindrischen Dauermagneten 224 auf. Mittels des Dauermagneten 224 kann die Schlauchklemme 312 beliebig auf der Arbeitsplatte 204 positioniert und fixiert werden.

Ferner weist der Klemmensockel 314 wenigstens eine hohle kreiszylindrische, parallel zur z-Achse verlaufende Klemmenaufnahme 318 auf, wobei jeweils in der Klemmenaufnahme 318 ein kreiszylindrischer Klemmenschaft 322 der Schlauchklemme 312 angeordnet und/oder eingeschraubt ist. Die Schlauchklemme 312 weist ferner eine von oben zugängliche Schlauchaufnahme 324 mit jeweils zwei Klemmenarmen 326 auf, wobei ein Schlauch von oben in die Schlauchaufnahme 324 geklemmt werden kann und dabei die Klemmenarme 326 elastisch verformt bzw. verbogen werden.

Gemäß der Fig. 2 und 3 kann die Haltevorrichtung 200 ferner eine Schutzplatte 330 aufweisen. Die Schutzplatte 330 erstreckt sich im montierten Zustand parallel zur Plattenebene 222. Die Schutzplatte 330 ist vorzugsweise entlang der z-Achse zwischen dem Grundsockel 236 und dem Adapterstück 236 angeordnet. Die Schutzplatte 330 kann vorzugsweise auf der Sockeloberseite 230 angeordnet werden und/oder aufliegen. Alternativ kann die Schutzplatte 330 zwischen dem Adapterstück 236 und dem Düsenkopf 256 angeordnet sein. Die Schutzplatte 330 dient zum Schutz der Haltevorrichtung 200, insbesondere vor dem Laserstrahl der Laservorrichtung 600. Somit kann gewährleistet werden, dass die Haltevorrichtung 200, insbesondere die Grundplatte 202 und/oder die Arbeitsplatte 204 und/oder die Sockel und/oder die Schlauchklemmen 312 und/oder die Schläuche und/oder die Adapterstücke 236 und/oder Modulstege 290, weniger verschleißen und langlebig ausgebildet sind. Es ist denkbar, dass die Schutzplatte 330 für das menschliche Auge transparent und für den Laserstrahl im Wesentlichen undurchlässig ist. Dazu kann die Schutzplatte 330 derart ausgebildet sein, dass mittels dielektrischer Schichten oder spezieller Farbstoffe, selektiv Licht bestimmter Wellenlängen, in dem Fall Laserlicht, absorbiert oder reflektiert wird, oder dass polarisationsabhängige Materialien Verwendung finden, wobei das Laserlicht eine andere Polarisation, wie das sichtbare Licht hat, oder dass nichtlineare optische Materialien Verwendung finden, die in Abhängigkeit der Lichtintensität ihre optischen Eigenschaften ändern. Dabei ist zu beachten, dass die Schutzplatte 330 in Abhängigkeit des eingesetzten Lasers (Wellenlänge, Leistung etc.) zum Schutz der Komponenten der Haltevorrichtung 200 ausgebildet ist.

Ferner kann die Schutzplatte 330 als Rasterplatte mit Rasterausnehmungen 332 ausgebildet sein. Die Rasterausnehmungen 322 dienen zur Aufnahme der Unterdruckvorrichtungen 206 und/oder der Unterstützungsmodule 208. Vorzugsweise wird zur Montage der Haltevorrichtung 200 zunächst die Schutzplatte 330 mit den Rasterausnehmungen 332 an der Arbeitsplatte 204 bereitgestellt, wobei die Rasterausnehmungen 332 in Abhängigkeit der Bewegungsbahn des Laserstrahls positioniert sind. Mittels der Rasterausnehmungen 332 können dann die Unterdruckvorrichtungen 206 und/oder die Unterstützungsmodule 208 auf der Arbeitsplatte 204 positioniert und fixiert werden. Somit wird verhindert, dass doch eine Unterdruckvorrichtung 206 in die Bewegungsbahn des Laserstrahls gelangt oder dass das Flachmaterial 12 nur unzureichend gegriffen wird. Es ist denkbar, dass dabei die Unterdruckvorrichtungen 206 und/oder die Unterstützungsmodule 208 von den Sockeln 226, 288 zunächst gelöst sind und in der Reihenfolge Sockel 226, 288 - Schutzplatte 330 - Adapterstück 236 oder Modulsteg 290 montiert werden. So kann die Schutzplatte 330 zusätzlich fixiert werden.

Im Bearbeitungsbereich 18 weist gemäß Fig. 12 die Bearbeitungsvorrichtung 10 die Laservorrichtung 600 auf. Die Laservorrichtung 600 ist derart eingerichtet, dass ein durch die Laservorrichtung 600 emittierter, im Wesentlichen parallel zur z-Achse verlaufender Laserstrahl auf das Flachmaterial 12 gerichtet ist und es an einem Auftreffpunkt zu einem Energieeintrag in das Flachmaterial 12 kommt, sodass das Flachmaterial an dem Auftreffpunkt in ein Schnittstück 1 und ein Verschnitt 2 zugeschnitten werden kann. Das Schnittstück 1 ist das letztlich zu erzeugende Produkt. Der Laserstrahl kann vorzugsweise über einen Arbeitsbereich bewegt werden, wobei der Arbeitsbereich im Wesentlichen der Längs- und Querstreckung des Flachmaterials 12 entspricht. Die Laservorrichtung 600 weist vorzugsweise ein Achssystem 602 zum Verlagern des Laserstrahls entlang der x-Achse mittels einer ersten Linearachse 604 und entlang der y-Achse mittels einer zweiten Linearachse 606 auf. Ferner ist denkbar, dass das Achssystem 602 eine nicht dargestellte dritte Linearachse zum Verlagern entlang der z-Achse aufweist.

Das Flachmaterial 12, das Schnittstück 1 und der Verschnitt 2 können mittels einer Transportvorrichtung 800 gemäß Fig. 12 gehandhabt werden.

## Patentansprüche

1. Haltevorrichtung (200) zum Halten eines Flachmaterials (12) in einer Bearbeitungsvorrichtung (10), insbesondere einer Laser-Bearbeitungsvorrichtung, die Haltevorrichtung (200) **umfassend:**
eine Arbeitsplatte (204) mit einer entlang einer Plattenebene (222) erstreckenden Plattenoberseite (220),
entlang einer Halterichtung (271) erstreckende Unterdruckvorrichtungen (206) mit jeweils einem auf der Plattenoberseite (220) angeordneten Grundsockel (226) und einem am Grundsockel (226) angeordneten Düsenkopf (256) zum Ansaugen des Flachmaterials (12), entlang der Halterichtung (271) erstreckende Unterstützungsmodule (208) mit jeweils einem auf der Plattenoberseite (220) angeordneten Modulsockel (288) und einer am Modulsockel (288) angeordneten, entlang einer Bürstenebene (301) erstreckenden Bürste (302) zum Tragen des Flachmaterials (12).

2. Haltevorrichtung (200) nach Anspruch 1,
wobei die Unterdruckvorrichtungen (206) und/oder die Unterstützungsmodule (208) derart angeordnet sind, dass die Halterichtung (271) senkrecht zur Plattenebene (222) verläuft.

3. Haltevorrichtung (200) nach Anspruch 1 oder 2,
wobei die Arbeitsplatte (204) ein ferromagnetisches Material umfasst, und wobei die Unterdruckvorrichtung (206) und/oder die Unterstützungsmodule (208) jeweils einen Dauermagneten (224) zum Fixieren der Unterdruckvorrichtung (206) und/oder der Unterstützungsmodule (208) an der Arbeitsplatte (204) aufweist.

4. Haltevorrichtung (200) nach einem der vorherigen Ansprüche, wobei die Unterdruckvorrichtung (206) ein zwischen dem Grundsockel (226) und dem Düsenkopf (256) angeordnetes Adapterstück (236) aufweist.

5. Haltevorrichtung (200) nach einem der vorherigen Ansprüche, wobei in der Unterdruckvorrichtung (206) eine entlang der Halterichtung (271) verlaufende Leitung (272) vorgesehen ist, welche fluidisch einen am Grundsockel (226) angeordneten Leitungseingang (274) zum Anschluss an eine Unterdruckversorgung und einen am Düsenkopf (256) angeordneten Leitungsausgang (276) verbindet.

6. Haltevorrichtung (200) nach einem der vorherigen Ansprüche, wobei die Unterstützungsmodule (208) derart an der Arbeitsplatte (204) angeordnet sind, dass die Bürstenebene (301) senkrecht zur Plattenebene (220) verläuft.

7. Haltevorrichtung (200) nach einem der vorherigen Ansprüche, wobei die Unterstützungsmodule (208) jeweils zwischen dem Modulsockel (288) und der Bürste (302) ein Modulsteg (290) aufweisen.

8. Haltevorrichtung (200) nach einem der vorherigen Ansprüche, wobei die Unterstützungsmodule (208) jeweils eine Bürstenaufnahme (300) zur Aufnahme der Bürste (302) aufweisen.

9. Haltevorrichtung (200) nach Anspruch 8, wobei in der Bürstenaufnahme (300) ein Klemmelement (308) zum Fixieren der Bürste (302) in der Bürstenaufnahme (300) vorgesehen ist.

10. Haltevorrichtung (200) nach einem der vorherigen Ansprüche, wobei eine parallel zur Plattenebene (222) erstreckende Schutzplatte (330) oberhalb der Arbeitsplatte (204) vorgesehen ist.

11. Haltevorrichtung (200) nach Anspruch 10, wobei die Schutzplatte (330) als Rasterplatte ausgebildet ist und Rasterausnehmungen (332) zur Aufnahme von Unterdruckvorrichtungen (206) und/oder Unterstützungsmodulen (208) aufweist.

12. Haltevorrichtung (200) nach einem der vorherigen Ansprüche, wobei ferner wenigstens eine Schlauchklemme (312) zum Fixieren von Schläuchen vorgesehen ist.

13. Haltevorrichtung (200) nach Anspruch 12, wobei die Schlauchklemme (312) einen Klemmensockel (314) mit einem Dauermagneten (224) zum Fixieren der Schlauchklemme (312) auf der Arbeitsplatte (204) aufweist.

14. Baukasten mit wenigstens einer Arbeitsplatte (204), mit Unterdruckvorrichtungen (206) und mit wenigstens einem Unterstützungsmodul (208), wobei sich die Unterdruckvorrichtungen (206) in der Größe und/oder in der Form und/oder im Material unterscheiden, wobei das wenigstens eine Unterstützungsmodul (206) einen Modulsockel (288) und einer am Modulsockel (288) angeordneten, entlang einer Bürstenebene (301) erstreckende Bürste (302) zum Tragen eines Flachmaterials (12) aufweist.

15. Bearbeitungsvorrichtung (10), insbesondere Laser-Bearbeitungsvorrichtung, zur Bearbeitung von Flachmaterialien (12) mit einer Haltevorrichtung (200) nach einem der Ansprüche 1 bis 13.
